# EUROPÄISCHE PATENTSCHRIFT

(11) **EP 0 754 113 B1**
(45) Veröffentlichungstag und Bekanntmachung des Hinweises auf die Patenterteilung: **01.08.2001**
(21) Anmeldenummer: 96904011.2
(22) Anmeldetag: 07.02.1996
(51) Int. Cl.: B29C 47/08

(54) **AM AUSGANG EINES EXTRUDERS ANGEBRACHTER DÜSENKOPF**
NOZZLE HEAD ARRANGED AT THE OUTLET OF AN EXTRUDER
TETE DE FILIERE DISPOSEE A LA SORTIE D'UNE EXTRUDEUSE

(30) Priorität: 08.02.1995 DE 19504119
(43) Veröffentlichungstag der Anmeldung: 22.01.1997
(73) Patentinhaber: Berstorff GmbH, 30625 Hannover (DE)
(72) Erfinder: ROCKSTEDT, Siegward, D-53474 Bad Neuenahr (DE)
(74) Vertreter: Bardehle, Heinz, Dipl.-Ing.
(86) Internationale Anmeldenummer: EP9600511
(87) Internationale Veröffentlichungsnummer: WO9624481

(56) Entgegenhaltungen:
- WO-A-93/15895
- DE-A- 3 508 547
- DE-U- 8 610 598
- US-A- 4 652 410
- US-A- 5 198 237

## Beschreibung

Die Erfindung bezieht sich auf einen am Ausgang eines Extruders angebrachten Düsenkopf zum Austragen von thermoplastischen Kunststoffen, der von dem im Extruder aufgeschmolzenen Kunststoff durchströmt wird und diesen durch eine Düsenplatte an der Austrittsseite des Düsenkopfes abgibt, wobei der Düsenkopf in einer Schienenführung einer zwischen Ausgang des Extruders und Düsenkopf angeordneten Zwischenplatte quer zum Kunststoffstrom längs verschiebbar gelagert und von der Zwischenplatte durch Längsverschieben in der Schienenführung abnehmbar ist.

Bisher hat man den Düsenkopf durch Verschrauben am Ausgang des Extruders befestigt. Für eine Reinigung des Düsenkopfes, die sowohl bei Verschmutzung als auch beim Übergang auf ein anderes Kunststoffmaterial notwendig wird, muß dann der Düsenkopf abgeschraubt und gegebenenfalls durch einen bereitstehenden Düsenkopf ersetzt werden, der dann seinerseits am Ausgang des Extruders anzuschrauben ist. Handelt es sich dabei um einen besonders großen und schweren Düsenkopf, so hat man diesen auch schon über ein Scharnier am Ausgang des Extruders angebracht, von dem der Düsenkopf zwecks Reinigung der genannten Anordnung weggeschwenkt wird. In diesem Falle ist aber die schnelle Auswechslung eines verschmutzten Düsenkopfes durch einen bereitstehenden Düsenkopf nicht möglich.

In der PCT-Anmeldung WO-A-93/15895 ist eine am Ausgang eines Extruders montierte Düsenanordnung offenbart, die einen verschiebbaren Düsenkopf enthält. Der Düsenkopf ist in einer Einfassung gehalten, die zusammen mit dem mit ihr verschraubten Düsenkopf in einer Schienenführung einer zwischen dem Ausgang des Extruders und dem Düsenkopf angeordneten Zwischenplatte quer zum Kunststoffstrom längs verschiebbar gelagert ist. Zwecks Abnahme des Düsenkopfes wird dieser zusammen mit der Einfassung in der Schienenführung verschoben, bis diese Einheit abgenommen werden kann, woraufhin diese Einheit in ihre Teile zerlegt werden muß, um an den Düsenkopf heranzukommen. Dieser ist mittels Verschraubungen an der Einfassung befestigt. Diese Konstruktion erfordert für das Auswechseln des Düsenkopfes also eine umständliche und damit zeitaufwendige Handhabung.

Der Erfindung liegt die Aufgabe zugrunde, den Düsenkopf so zu gestalten, daß er sich auf einfache Weise vom Ausgang des Extruders abnehmen und gegebenenfalls durch einen bereit stehenden Düsenkopf zu ersetzen ist, wobei dafür zu sorgen ist, daß durch einfache Mittel sowohl die Verschiebbarkeit als auch die Abdichtung des Düsenkopfs gegenüber dem Extruder gewährleistet ist. Erfindungsgemäß geschieht dies dadurch, daß die Schienenführung aus Längsausnehmungen in der Zwischenplatte und Längsvorsprüngen des Düsenkopfes besteht, wobei die Längsausnehmungen mit ihren dem Extruder abgewandten Wänden Halterungen bilden, die von auf die Längsvorsprünge derart gerichteten Schrauben durchsetzt sind, daß sich die Längsvorsprünge gegen Dichtflächen der Zwischenplatte, die den Halterungen gegenüberliegen, durch die Schrauben andrücken, deren Lösen die Längsverschiebbarkeit des Düsenkopfes ermöglicht.

Durch diese Art der Lagerung des Düsenkopfes in der Schienenführung wird die Möglichkeit eröffnet, einerseits durch Längsverschieben des Düsenkopfes den Ausgang des Extruders zugänglich zu machen, so daß dieser Bereich für eine Reinigung frei zur Verfügung steht, und andererseits durch direkte Einwirkung der in die Schienenführung hineinragenden Schrauben die Schienenführung selbst zur Abdichtung des Übergangs vom Extruder zum Düsenkopf auszunutzen, wobei die Handhabung dieser Einrichtung denkbar einfach ist, nämlich im wesentlichen nur das Spannen bzw. Lösen der bei dieser Gestaltung leicht zugänglichen Schrauben erfordert. Die Abnahme des Düsenkopfes vom Ausgang des Extruders erfolgt dann durch eine Längsverschiebung bis in einen Bereich, in dem der Düsenkopf abnehmbar ist, so daß dieser entfernt vom Ausgang des Extruders leicht gereinigt werden kann. Ein zur Verfügung stehender sauberer Düsenkopf kann dann unmittelbar nach Abnahme des gegebenenfalls verschmutzten Düsenkopfes in die Schienenführung eingesetzt und in seine Normalposition gebracht werden, in der der Düsenkopf von dem aufgeschmolzenen Kunststoff durchströmt wird. Für dieses Auswechseln des Düsenkopfes sind nur wenige Handgriffe erforderlich, so daß dieser Vorgang sehr schnell abgewickelt werden kann. Eine Unterbrechung der Produktion tritt dabei nur sehr kurzfristig ein. Es ist hierbei nicht erforderlich, die dabei gelöste Verschraubung völlig von der Zwischenplatte abzuschrauben, da lediglich ein Lockern der Verschraubung notwendig ist, um den Düsenkopf in Längsrichtung zu verschieben und schließlich von der Zwischenplatte abzunehmen.

Zweckmäßig gestaltet man einen Hohlraum in der Zwischenplatte zur Aufnahme des aufgeschmolzenen Kunststoffs so, daß dessen Querschnitt durchgehend bis zum Düsenkopf mindestens der Gehäusebohrung des ...

Extruders entspricht. Bei dieser Gestaltung kann bei ausreichend längsverschobenem Düsenkopf bzw. dessen Abnahme die im Extruder enthaltene Schnecke ohne weiteres aus dem Gehäuse des Extruders herausgezogen werden, da die Schnecke wegen des entsprechend großen Querschnitts des Hohlraums in der Zwischenplatte ohne weiteres durch diesen herausgezogen werden kann.

Um auch die Düsenplatte gesondert einer Reinigung unterziehen zu können, oder eine Düsenplatte gegen eine andere mit einer Anordnung der Löcher zu ersetzen, lagert man zweckmäßig die Düsenplatte in einer weiteren Schienenführung am Düsenkopf, so daß die Düsenplatte vom Düsenkopf durch Längsverschieben abnehmbar ist, wobei sich die Düsenplatte am Düsenkopf über Dichtflächen abstützt, gegen die die Düsenplatte durch eine Verschraubung anlegbar ist, deren Lösen die Längsverschiebbarkeit der Düsenplatte ermöglicht. Bei dieser Gestaltung ergibt sich ähnlich wie bei der Abstützung des Düsenkopfes gegenüber der Zwischenplatte eine Abdichtung über Dichtflächen, gegen die die Düsenplatte durch die Verschraubung anlegbar ist, so daß mit dem Lösen der Verschraubung ohne deren Herausschrauben die Düsenplatte vom Düsenkopf in einfacher Weise abnehmbar ist. Sowohl vor der Abnahme der Düsenplatte mit Düsenkopf als auch der Düsenplatte allein läßt sich die Abnahme dieser Bauelemente durch deren Verschieben leicht und schnell ermöglichen, so daß bei Abnahme und Auswechslung der Düsenplatte nur eine sehr kurzzeitige Produktionsunterbrechung erforderlich ist.

In dem Düsenkopf kann man Heizpatronen vorsehen, um diesen gegebenenfalls auf eine erhöhte Temperatur zu bringen, so daß dem durchgedrückten Kunststoffmaterial eine ausreichende Viskosität erhalter bleiben kann.

Häufig ist der Düsenkopf mit einem Verteiler versehen, der den aufgeschmolzenen Kunststoff vom Ausgang des Extruders her dem inneren des Düsenkopfes zuleitet. Ein solcher Verteiler kann beispielsweise mit einem Filter ausgestattet sein, um vom Extruder herrührende Verschmutzungen auszufiltern. Im Falle der Verwendung eines solchen Verteilers wird dieser zweckmäßig zwischen Düsenkopf und Zwischenplatte angeordnet, wobei sich der Verteiler mit eigenen Dichtflächen gegen die Zwischenplatte und den Düsenkopf abstützt. Die Abdichtung im Bereich des Verteilers erfolgt also in der gleichen Weise, wie dies oben in Bezug auf die direkte Abdichtung zwischen Düsenkopf und Zwischenplatte beschrieben ist.

In den Figuren ist ein Ausführungsbeispiel der Erfindung dargestellt, es zeigen:
- Fig. 1: einen Längsschnitt durch den am Ausgang eines Extruders angebrachten Düsenkopf mit Düsenplatte,
- Fig. 2: die gleiche Anordnung zusätzlich mit einem Verteiler,
- Fig. 3: einen Längsschnitt durch die Anordnung gemäß Fig. 1 entlang der Linie III-III aus Figur 2, und zwar in der geschlossenen Position, d.h. bei nichtverschobenem Düsenkopf,
- Fig. 4: die gleiche Anordnung wie Fig. 2 mit seitlich verschobenem Verteiler mit Düsenkopf.

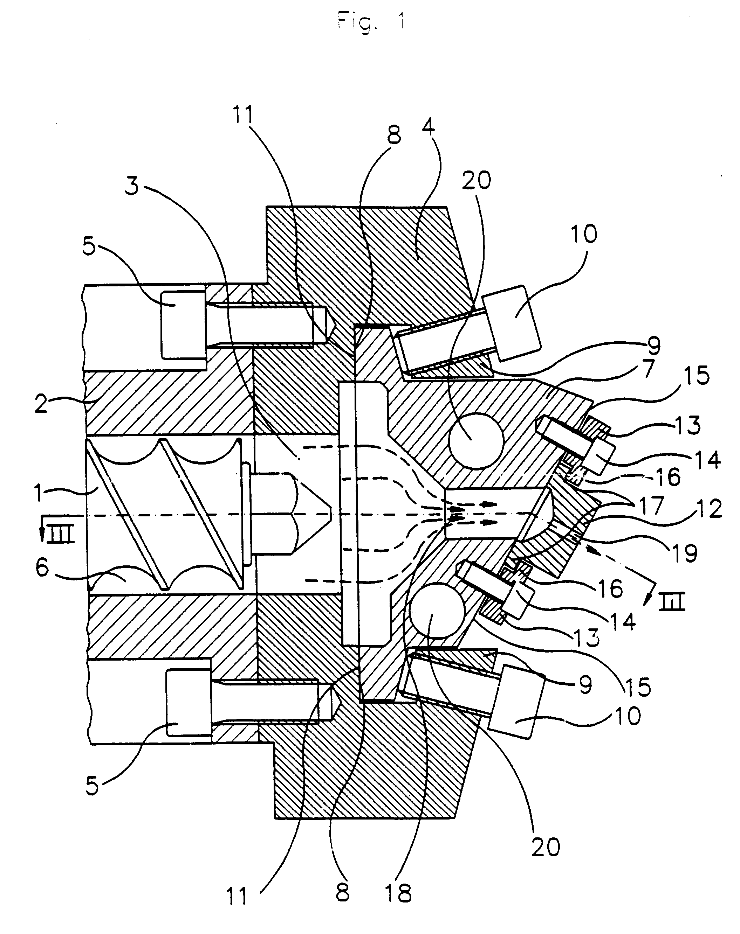

In der Figur 1 ist eine Extruderschnecke 1 dargestellt, die sich in dem Extrudergehäuse 2 dreht. Durch die Extruderschnecke 1 wird hier nicht dargestellter Kunststoff zu dem Ausgang der Extruderschnecke 1 befördert, der hier durch den Hohlraum 3 in der Zwischenplatte 4 gebildet wird, die mittels der beiden Schrauben 5 an dem Extrudergehäuse 2 befestigt ist. Der Hohlraum 3 hat hier ersichtlich die gleichen Dimensionen wie die Bohrung 6 des Extrudergehäuses 2, so daß bei Abnahme der an der Zwischenplatte 4 befestigten Bauteile (auf die weiter unten näher eingegangen wird) die Extruderschnecke 1 problemlos durch den Hohlraum 3 aus dem Extrudergehäuse 2 herausgezogen werden kann. Dies ist einerseits für eine Montage zweitens auch zum Reinigen erforderlich.

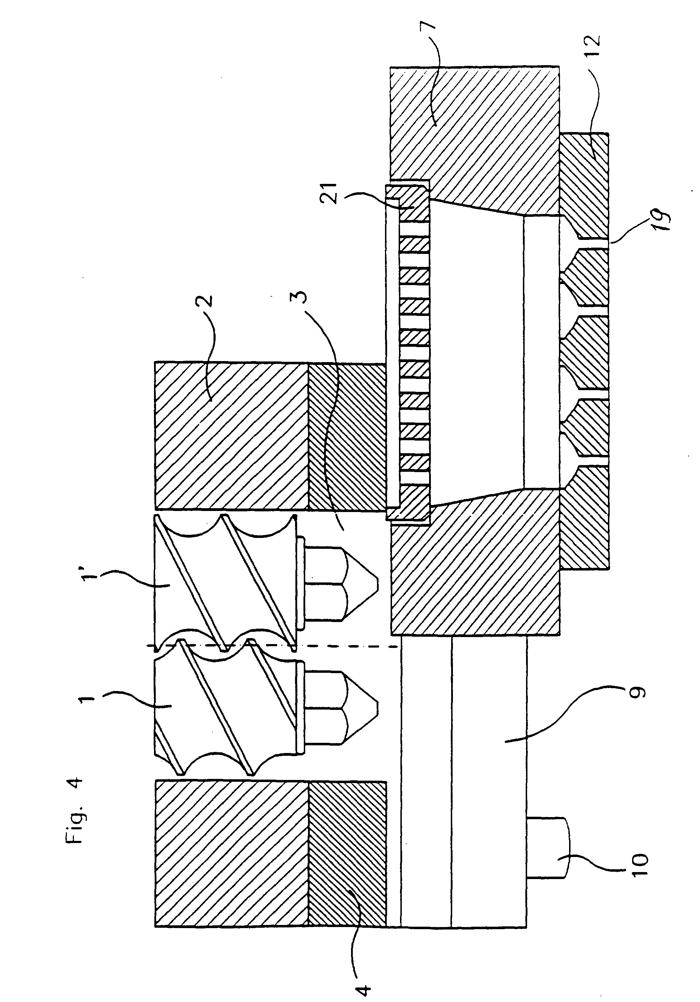

An der Zwischenplatte 4 ist der Düsenkopf 7 angebracht, und zwar in einer Schienenführung, die durch die Dichtfläche 8 und die beiden Halterungen 9 gebildet ist, welch letztere aus der Zwischenplatte 4 nach innen zu herauswachsen. In dieser Schienenführung ist der Düsenkopf 7 längs verschiebbar (also senkrecht zur Zeichenebene) gelagert. Seine Arrettierung gegenüber der Zwischenplatte 4 erfolgt mittels der beiden Schrauben 10, bei deren Anziehen der Düsenkopf 7 gegen die Dichtflächen 8 der Zwischenplatte 4 angedrückt werden. Um dabei eine sichere Abdichtung zu erzielen, sind die Auflageflächen des Düsenkopfes 7 gegenüber den Dichtflächen 8 ebenfalls als Dichtflächen 11 ausgebildet. Beim Lösen der Schrauben 10 läßt sich der Düsenkopf 7, wie gesagt, längs verschieben bis in eine Lage, aus der er von der Zwischenplatte 4 abgenommen werden kann, was anhand der Fig. 4 mehr erläutert wird.

Am Düsenkopf 7 ist die Düsenplatte 12 angebracht, und zwar mittels der beiden Halteklammern 13, die mittels der Schrauben 14 an die Außenfläche 15 des Düsenkopfes 7 angedrückt werden und dabei als weitere Schienenführung mit ihren Vorsprüngen 16, die entsprechenden Stützen 17 an der Düsenplatte 12 übergreifen und diese gegen die Außenfläche 15 drücken. Um auch dabei eine Abdichtung zu erzielen, sind die Außenfläche 15 und die entsprechende Gegenfläche an den Stützen 17 als Dichtflächen ausgebildet. Durch Lösen der Schrauben 14 wird die Anpressung der Stützen 17 gegen die Außenfläche 15 gelöst, so daß die Düsenplatte 12 längs verschoben (senkrecht zur Zeichenebene) werden kann, bis sie schließlich in einen Bereich gelangt, wo sie von dem Düsenkopf 7 abgenommen werden kann. Hierzu wird auf die diesbezüglichen Erläuterungen zur Beweglichkeit und Abnahme des Düsenkopfes 7 verwiesen.

Bei der in Fig. 1 dargestellten Anordnung strömt von der Extruderschnecke 1 aufgeschmolzenes Kunststoffmaterial in den Hohlraum 3 und von dort in den Durchlaß 18 im Düsenkopf 7, von wo aus das Kunststoffmaterial durch die Düsen 19 als Strang geschmolzenen Kunststoffmaterials austritt.

In dem Düsenkopf 7 sind Bohrungen 20 vorgesehen, in die Heizpatronen eingesetzt werden, die dazu dienen, das hindurchströmende Kunstoffmaterial auf einer gewünschten Temperatur zu halten.

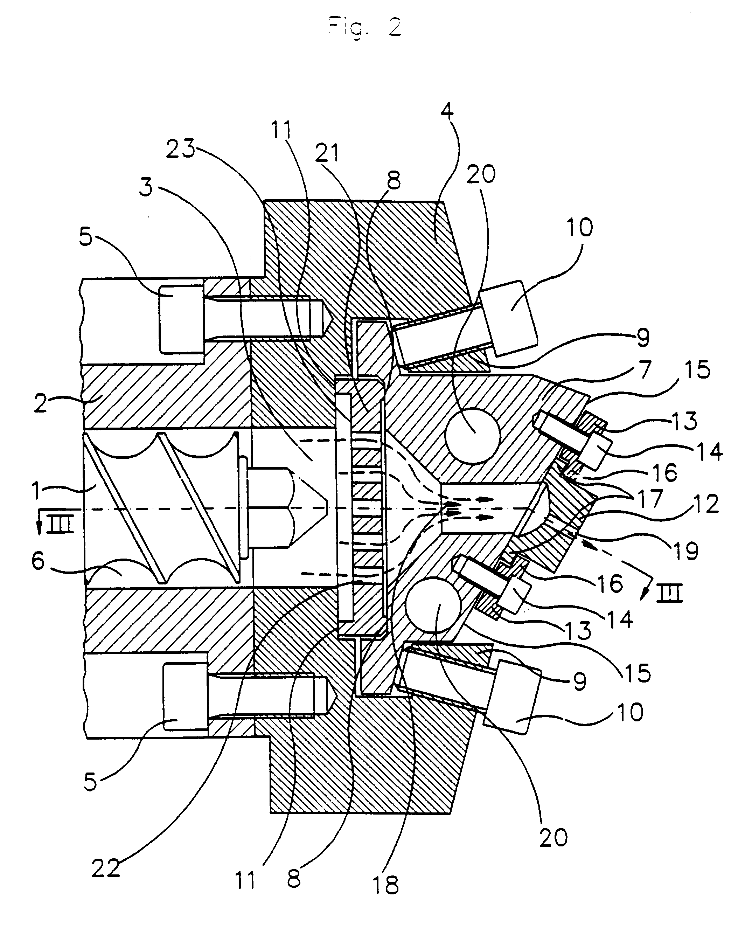

In der Fig. 2 ist die gleiche Anordnung wie in Fig. 1 dargestellt, jedoch ergänzt durch den Verteiler 21, der dichtend zwischen der Zwischenplatte 4 und dem Düsenkopf 7 angeordnet ist. Der Verteiler ist hier mit mehreren Durchlässen 22 versehen, die von dem aufgeschmolzenen Kunststoff durchströmt werden. Der Verteiler 21 dient dazu, ggf. auf seiner Innenfläche 23 ein nichtdargestelltes Filter zu tragen, das dazu dienen kann, aus zu verarbeitenden Kunstoffmaterial Verunreinigungen herauszufiltern. Der Verteiler 21 ist sowohl an seiner dem Extruder 1 als auch dem Düsenkopf 7 zugewandten Seite mit Dichtflächen versehen, die sich gegen entsprechende Dichtflächen an der Zwischenplatte 4 und am Düsenkopf 7 abstützen. Diese Dichtflächen werden bei Anziehen der Schrauben 10 aneinandergepreßt. wozu, um eine sichere Flächenpressung zu erzielen, zwischen den Flächen 8 und 11 ein geringer Abstand einzuhalten ist. Im übrigen wird zur Funktion der Anordnung gemäß Fig. 2 auf die diesbezüglichen Erläuterungen zu Fig. 1 verwiesen.

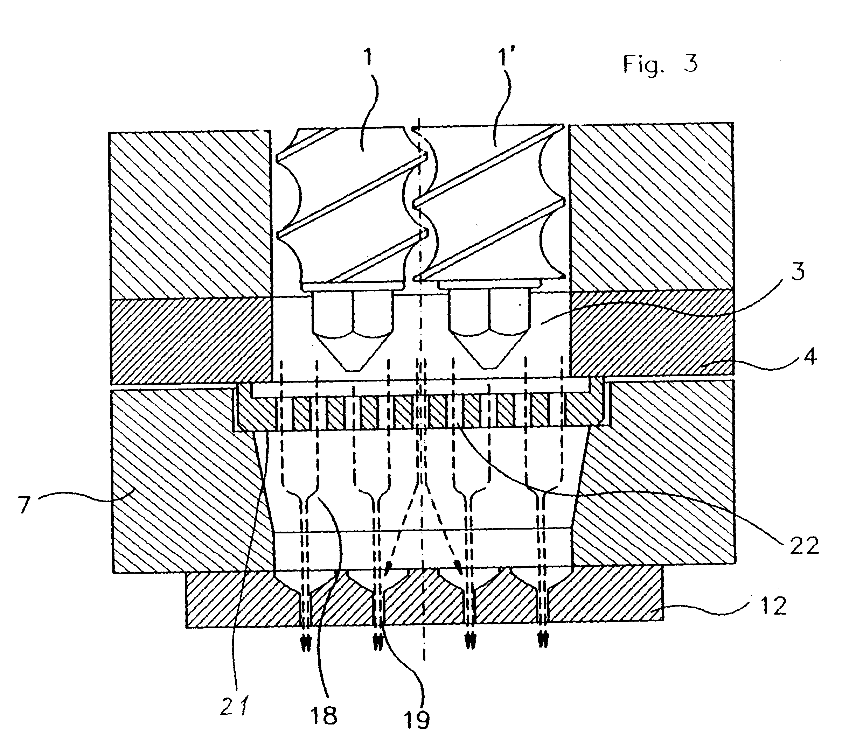

In der Fig. 3 ist ein Längsschnitt durch die Anordnung gemäß Fig. 2 dargestellt, und zwar längs der Linie III-III aus Fig. 2. Wie ersichtlich handelt es sich bei der hier verwendeten Extruderanordnung um einen Doppelschneckenextruder mit den Schnecken 1 und 1', die das ihnen zugeführte Kunststoffmaterial aufschmelzen und in den Hohlraum 3 der Zwischenplatte 4 drücken. Von dem Hohlraum 3 wird dann das Kunststoffmaterial durch die Durchlässe 22 im Verteiler 21 hindurchgedrückt, von wo aus das Kunststoffmaterial in den Durchlaß 18 des Düsenkopfes 7 gelangt. Danach tritt das Kunstoffmaterial durch die Düsen 19 in der Düsenplatte 12 aus.

Ergänzend sei zur Funktion der Anordnung gemäß Fig. 3 auf die Erläuterungen zu den Figuren 1 und 2 verwiesen.

In der Fig. 4 ist die Anordnung gemäß Fig. 3 in einer Verschiebungslage dargestellt, in der der Düsenkopf 7 mit der Düsenplatte 12 und dem Verteiler 21 seitlich verschoben dargestellt ist, wobei aber der Düsenkopf 7 noch von den Halterungen 9 an der Zwischenplatte 4 gehalten ist. Wie ersichtlich wird durch dieses Verschieben der Hohlraum 3 zugängig gemacht (in der in Fig. 4 dargestellten Lage allerdings nur teilweise). Durch hier nicht dargestelltes weiteres Verschieben des Düsenkopfes 7 gelangt dieser schließlich in eine Position, in der er wegen des Endes der Halterungen 9 von der Zwischenplatte 4 und damit vom Extrudergehäuse 2 abgenommen werden kann.

Die gleiche Technik der Abnahme des Düsenkopfes 7 ist auch auf die Düsenplatte 12 anwendbar, die dabei aus dem Vorsprüngen 16 herausgeschoben wird (siehe Figuren 1 und 2).

## Patentansprüche

1. Extruder (1/2) zum Austragen von thermoplastischen kunststoffen mit einem am Ausgang angebrachten Düsenkopf (7), der von dem im Extruder (1/2) aufgeschmolzenen Kunststoff durchströmt wird und diesen durch eine Düsenplatte (12) an der Austrittsseite des Düsenkopfes (7) abgibt, wobei der Düsenkopf (7) in einer Schienenführung (8,9) einer zwischen Ausgang des Extruders (1/2) und Düsenkopf (7) angeordneten Zwischenplatte (4) quer zum Kunststoffstrom längsverschiebbar gelagert und von der Zwischenplatte (4) durch Längsverschieben in der Schienenführung abnehmbar ist, **dadurch gekennzeichnet,** daß die Schienenführung (8,9) aus Längsausnehmungen in der Zwischenplatte (4) und Längsvorsprüngen des Düsenkopfes (7) besteht, wobei die Längsausnehmungen mit ihren dem Extruder (1/2) abgewandten Wänden Halterungen (9) bilden, die von auf die Längsvorsprünge derart gerichteten Schrauben (10) durchsetzt sind, daß sich die Längsvorsprünge gegen Dichtflächen (8,11) der Zwischenplatte (4), die den Halterungen (9) gegenüberliegen, durch die Schrauben (10) andrücken, deren Lösen die Längsverschiebbarkeit des Düsenkopfes ermöglicht.

2. Extruder nach Anspruch 1, dadurch gekennzeichnet, daß die Zwischenplatte (4) einen Hohlraum (3) für die Aufnahme des aufgeschmolzenen Kunststoffs enthält, dessen Querschnitt durchgehend bis zum Düsenkopf (7) mindestens der Gehäusebohrung (6) des Extruders (1/2) entspricht.

3. Extruder nach Anspruch 1 oder 2, dadurch gekennzeichnet, daß die Düsenplatte (12) in einer weiteren Schienenführung (16/17), am Düsenkopf (7) längsverschiebbar gelagert und vom Düsenkopf (7) durch Längsverschieben abnehmbar ist, wobei sich die Düsenplatte (12) am Düsenkopf (7) über Dichtflächen abstützt, gegen die die Düsenplatte (12) durch eine Verschraubung (14) andrückbar ist, deren Lösen die Längsverschiebbarkeit der Düsenplatte (12) ermöglicht.

4. Extruder nach einem der Ansprüche 1 bis 3, dadurch gekennzeichnet, daß der Düsenkopf (7) mit Heizpatronen versehen ist.

5. Extruder nach einem der Ansprüche 1 bis 4, dadurch gekennzeichnet, daß zwischen Düsenkopf (7) und Zwischenplatte (4) ein Verteiler (21) angeordnet ist, der sich mit eigenen Dichtflächen gegen die Zwischenplatte (4) und den Düsenkopf (7) abstützt,

## Claims

1. Extruder (1/2) for the discharge of thermoplastics with a die head (7) fitted to the outlet, the plastic melted in the extruder (1/2) flowing through the die head and being delivered through a die plate (12) on the outlet side of the die head (7), wherein the die head (7) is supported in a longitudinally displaceable manner transversely to the polymer flow in a rail guide (8, 9) on an intermediate plate (4) arranged between the outlet of the extruder (1/2) and the die head (7) and can be removed from the intermediate plate (4) by longitudinal displacement in the rail guide, characterised in that the rail guide (8, 9) consists of longitudinal recesses in the intermediate plate (4) and longitudinal projections on the die head (7), the walls of the longitudinal recesses directed away from the extruder (1/2) forming holders (9) traversed by screws (10) directed towards the longitudinal projections in such a manner that the longitudinal projections are pressed against sealing surfaces (8, 11) on the intermediate plate (4) opposite the holders (9) by means of the screws (10), the loosening of which allows for the longitudinal displaceability of the die head.

2. Extruder according to claim 1, characterised in that the intermediate plate (4) contains a cavity (3) for receiving the molten plastic, the cross section of which right up to the die head (7) corresponds at least to the barrel bore (6) of the extruder (1/2).

3. Extruder according to claim 1 or claim 2, characterised in that the die plate (12) is supported in a longitudinally displaceable manner on the die head (7) in a further rail guide (16/17) and can be removed from the die head (7) by longitudinal displacement, the die plate (12) being supported on the die head (7) by means of sealing surfaces against which the die plate (12) can be pressed by means of a screw coupling (14), the loosening of which allows for the longitudinal displaceability of the die plate (12).

4. Extruder according to one of claims 1 to 3, characterised in that the die head (7) is provided with cartridge heaters.

5. Extruder according to one of claims 1 to 4, characterised in that a manifold (21) is arranged between the die head (7) and the intermediate plate (4) and is supported via its own sealing surfaces against the intermediate plate (4) and the die head (7).

## Revendications

1. Extrudeuse (1/2) servant à délivrer des matières thermoplastiques, comportant une tête de filière (7) installée à la sortie, qui est traversée par la matière plastique fondue dans l'extrudeuse (1/2) et délivre cette matière plastique au moyen d'une plaque de filière (12) sur le côté de sortie de la tête de filière (7), et dans laquelle la tête de filière (7) est montée de manière à être déplaçable dans un guide formé de rails (8,9) d'une plaque intercalaire (4) disposée entre la sortie de l'extrudeuse (1/2) et la tête de filière (7), de manière à être déplaçable longitudinalement transversalement par rapport au courant de matière plastique et peut être retirée de la plaque intercalaire (4) par déplacement longitudinal dans le guide formé de rails, caractérisée en ce que le guide formé de rails (8,9) est constitué par des évidements longitudinaux formés dans la plaque intercalaire (4) et des appendices saillants longitudinaux de la tête de filière (7), les évidements longitudinaux formant, par leurs parois tournées à l'opposé de l'extrudeuse (1/2), des dispositifs de retenue (9), qui sont traversés par des vis (10) qui sont dirigées vers les parties saillantes longitudinales de telle sorte que les parties saillantes longitudinales sont serrées contre des surfaces d'étanchéité (8,11) de la plaque intercalaire (4), qui sont situées en vis-à-vis des dispositifs de retenue (9), par les vis (10), dont le desserrage permet un déplacement longitudinal de la tête de filière.

2. Extrudeuse selon la revendication 1, caractérisée en ce que la plaque intercalaire (4) contient une cavité (3) servant à recevoir la matière plastique fondue et dont la section transversale correspond, et ce continûment jusqu'à la tête de filière (7), au moins au perçage (6) du carter de l'extrudeuse (1/2).

3. Extrudeuse selon la revendication 1 ou 2, caractérisée en ce que la plaque de filière (12) est montée de manière à être déplaçable longitudinalement dans un autre guide formé de rails (16/17), sur la tête de filière (7) et peut être retirée de la tête de filière (7) par déplacement longitudinal, ce qui a pour effet que la plaque de filière (12) prend appui sur la tête de filière (7) au moyen de surfaces d'étanchéité, contre lesquelles la plaque de filière (12) peut être repoussée par un système de vissage (14), dont le desserrage fournit la possibilité de déplacement longitudinal de la plaque de filière (12).

4. Extrudeuse selon l'une des revendications 1 à 3, caractérisée en ce que la tête de filière (7) est pourvue de cartouches chauffantes.

5. Extrudeuse selon l'une des revendications 1 à 4, caractérisée en ce qu'entre la tête de filière (7) et la plaque intercalaire (4) est disposé un distributeur (21), qui prend appui par des surfaces d'étanchéité propres, conter la plaque intercalaire (4) et la tête de filière (7).
